# EUROPEAN PATENT APPLICATION

(11) **EP 4 552 876 A1**
(43) Date of publication of application: **14.05.2025**
(21) Application number: 23835345.2
(22) Date of filing: 23.06.2023
(51) Int. Cl.: B60J 5/00

(54) **IMPACT-ABSORBING MEMBER FOR AUTOMOBILE DOOR, AUTOMOBILE DOOR, BLANK, AND METHOD FOR MANUFACTURING IMPACT-ABSORBING MEMBER FOR AUTOMOBILE DOOR**

(30) Priority: 04.07.2022 JP 2022107800
(71) Applicant: NIPPON STEEL CORPORATION, Chiyoda-ku Tokyo 100-8071 (JP)
(72) Inventor: SUZUKI Toshiya, Tokyo 100-8071 (JP); NAKATA Masahiro, Tokyo 100-8071 (JP); NISHIMURA Ryuichi, Tokyo 100-8071 (JP)
(74) Representative: Zimmermann & Partner Patentanwälte mbB
(86) International application number: PCT/JP2023/023377
(87) International publication number: WO 2024/009811

(57) **Abstract**

This impact-absorbing member for an automobile door is an impact-absorbing member for an automobile door formed from a blank, which is a single-piece blank or a tailored blank, and includes: a connection band portion extending in a first direction; and at least three connected portions each having one end connected to the connection band portion and extending in a second direction intersecting the first direction, in which the connected portion has an impact-absorbing portion that is a closed cross-sectional structure.

## Description

### TECHNICAL FIELD

The present invention relates to an impact-absorbing member for an automobile door, an automobile door, a blank, and a method for manufacturing an impact-absorbing member for an automobile door.

Priority is claimed on Japanese Patent Application No. 2022-107800, filed July 04, 2022, the content of which is incorporated herein by reference.

### BACKGROUND ART

In recent years, the application of high strength steel sheets to automobile exterior panels has been studied. By applying high strength steel sheets, a sheet thickness of the steel sheets can be reduced, thereby achieving a reduction in weight of exterior materials of automobiles.

However, since panel rigidity of the exterior materials depends on the sheet thickness, reducing the sheet thickness results in insufficient panel rigidity. In other words, if the sheet thickness is reduced, the exterior material is easily deformed in a case where the exterior material is pressed by hand.

Patent Document 1 discloses a technology that enables a weight reduction without decreasing panel rigidity and impact resistance performance by disposing impact-absorbing members in longitudinal and lateral directions inside an exterior panel, even when a sheet thickness of an exterior material is reduced.

### Citation List

### Patent Document

Patent Document 1: PCT International Publication No. WO2018/021422

### SUMMARY OF INVENTION

### Technical Problem

In the technology disclosed in Patent Document 1, since a plurality of the impact-absorbing members are separately press-formed, the number of components is large. In addition, it is necessary to prepare a press forming tool with a different shape for each inner surface shape of a portion to which the exterior panel is attached.

Furthermore, when welding separate impact-absorbing members to the exterior panel one by one, each impact-absorbing member has to be positioned individually before welding, which requires a large number of work steps and leads to an increase in manufacturing costs.

The present invention has been made in view of the above problems, and an object of the present invention is to provide an impact-absorbing member for an automobile door, an automobile door, a blank, and a method for manufacturing an impact-absorbing member for an automobile door, which are capable of exhibiting excellent panel rigidity and impact resistance performance at low cost.

### Solution to Problem

Specific aspects of the present invention are as described below.

(1) A first aspect of the present invention is an impact-absorbing member for an automobile door formed from a blank, which is a single-piece blank or a tailored blank, the impact-absorbing member for an automobile door including: a connection band portion extending in a first direction; and at least three connected portions each having one end connected to the connection band portion and extending in a second direction intersecting the first direction, in which the connected portion has an impact-absorbing portion that is a closed cross-sectional structure.
(2) In the impact-absorbing member for an automobile door according to (1), the blank may be the tailored blank, and the connection band portion and the connected portion may be integrated and connected at a joint portion.
(3) In the impact-absorbing member for an automobile door according to (2), the connected portion may have an overlapping surface that overlaps with a part of the connection band portion, and the joint portion may be formed in the overlapping surface such that the connection band portion and the connected portion are integrated and connected.
(4) **In** the impact-absorbing member for an automobile door according to (2) or (3), the joint portion may be a welded portion, and the welded portion may have no HAZ-softened portion.
(5) In the impact-absorbing member for an automobile door according to any one of (1) to (4), a tensile strength of the connected portion may be 1,100 MPa or more.
(6) In the impact-absorbing member for an automobile door according to any one of (1) to (5), a Vickers hardness of the connected portion may be 350 HV or more.
(7) A second aspect of the present invention is an automobile door including: the impact-absorbing member for an automobile door according to any one of (1) to (6); and an exterior panel to which the impact-absorbing member for an automobile door is attached.
(8) In the automobile door according to (7), the impact-absorbing member for an automobile door may be attached to a reinforcing member.
(9) In the automobile door according to (8), the reinforcing member may have an open cross section in a cross section perpendicular to an extension direction of the reinforcing member, and a closed cross-sectional structure may be formed by attaching the connection band portion of the impact-absorbing member for an automobile door to the reinforcing member.
(10) A third aspect of the present invention is a blank for forming an impact-absorbing member for an automobile door, the impact-absorbing member for an automobile door including a connection band portion extending in a first direction and at least three connected portions each having one end connected to the connection band portion and extending in a second direction intersecting the first direction, the connected portion having an impact-absorbing portion that is a closed cross-sectional structure. This blank includes: a connection band portion forming region that extends in the first direction and is formed into the connection band portion; and at least three connected portion forming regions that extend in the second direction and are formed into the at least three connected portions, each of the at least three connected portion forming regions having one end connected to the connection band portion forming region, in which the blank is a single-piece blank or a tailored blank.
(11) The blank according to (10) may be the tailored blank, in which the connection band portion forming region and the connected portion forming region may be integrated and connected at a joint portion.
(12) In the blank according to (11), the connected portion forming region may have an overlapping surface forming region that overlaps with a part of the connection band portion forming region, and the joint portion may be formed in the overlapping surface such that the connection band portion forming region and the connected portion forming region may be integrated and connected at the joint portion.
(13) In the blank according to any one of (10) to (12), a cutout may be formed in the vicinity of a portion where the connection band portion forming region and the connected portion forming region are connected.
(14) A fourth aspect of the present invention is a method for manufacturing an impact-absorbing member for an automobile door, the impact-absorbing member for an automobile door including a connection band portion extending in a first direction and at least three connected portions each having one end connected to the connection band portion and extending in a second direction intersecting the first direction, the connected portion having an impact-absorbing portion that is a closed cross-sectional structure, the method including: a first step of press-forming a blank, which includes a connection band portion forming region that extends in the first direction and is formed into the connection band portion, and at least three connected portion forming regions that extend in the second direction and are formed into the at least three connected portions, each of the at least three connected portion forming regions having one end connected to the connection band portion forming region, and is a single-piece blank or a tailored blank, in a cold state to obtain an intermediate press-formed article; and a second step of press-forming the intermediate press-formed article to obtain the impact-absorbing member for an automobile door, in which, in the second step, in a case where the blank is the single-piece blank, the intermediate press-formed article is press-formed in a state of being heated to a temperature of an Ac3 point or higher, and in a case where the blank is the tailored blank, the intermediate press-formed article is press-formed in a cold state or in a state of being heated to a temperature of the Ac3 point or higher.
(15) In the method for manufacturing an impact-absorbing member for an automobile door according to (14), the blank may be the tailored blank, and the connection band portion forming region and the connected portion forming region may be integrated and connected at a joint portion.
(16) In the method for manufacturing an impact-absorbing member for an automobile door according to (15), the connected portion forming region may have an overlapping surface forming region that overlaps with a part of the connection band portion forming region, and the joint portion may be formed in the overlapping surface such that the connection band portion forming region and the connected portion forming region are integrated and connected at the joint portion.
(17) In the method for manufacturing an impact-absorbing member for an automobile door according to (15) or (16), in the second step, the intermediate press-formed article may be press-formed in a state of being heated to a temperature of the Ac3 point or higher.

### Advantageous Effects of Invention

According to the present invention, it is possible to provide an impact-absorbing member for an automobile door, an automobile door, a blank, and a method for manufacturing an impact-absorbing member for an automobile door, which are capable of exhibiting excellent panel rigidity and impact resistance performance at low cost.

### BRIEF DESCRIPTION OF DRAWINGS

FIG. 1 is a perspective view showing a structure of an automobile door to which an impact-absorbing member according to a first embodiment of the present invention is attached.
FIG. 2 is a schematic view showing a cross section taken along one-dot chain line I-I' of FIG. 1.
FIG. 3 is a schematic view of the impact-absorbing member according to the first embodiment as viewed from a cabin side.
FIG. 4 is a schematic view showing dimensions of a test piece.
FIG. 5 is a schematic view showing a cross section taken along one-dot chain line II-II' of FIG. 3.
FIG. 6 is an enlarged view of an A1 portion shown in FIG. 3.
FIG. 7 is a diagram for describing steps for manufacturing the impact-absorbing member according to the first embodiment.
FIG. 8 is a schematic view showing a single-piece blank for manufacturing the impact-absorbing member according to the first embodiment.
FIG. 9 is a schematic view showing a state in which the single-piece blank, shown in a cross section taken along one-dot chain line III-III' of FIG. 8, is installed in a first forming tool.
FIG. 10 is a schematic view showing a cross section taken along one-dot chain line IV-IV' of FIG. 9.
FIG. 11 is a schematic view showing a state in which an upper forming tool is lowered to a bottom dead point in the first forming tool shown in FIG. 10.
FIG. 12 is a schematic view showing a state in which a member formed with the first forming tool is installed in a second forming tool.
FIG. 13 is a schematic view showing a cross section taken along one-dot chain line V-V' of FIG. 12.
FIG. 14 is a schematic view showing a state in which an upper forming tool is lowered to a bottom dead point in the second forming tool shown in FIG. 13.
FIG. 15 is a schematic view showing a state in which an intermediate press-formed article is installed in a third forming tool.
FIG. 16 is a schematic view showing a cross section taken along one-dot chain line VI-VI' of FIG. 15.
FIG. 17 is a schematic view showing a state in which an upper forming tool is lowered to a bottom dead point in the third forming tool shown in FIG. 16.
FIG. 18 is a schematic view showing an impact-absorbing member according to a second embodiment of the present invention.
FIG. 19 is an enlarged view of an A2 portion shown in FIG. 18.
FIG. 20 is a diagram for describing steps for manufacturing the impact-absorbing member according to the second embodiment.
FIG. 21 is a schematic view showing a tailored blank for manufacturing the impact-absorbing member according to the second embodiment.
FIG. 22 is a schematic view showing an impact-absorbing member according to a third embodiment of the present invention.
FIG. 23 is an enlarged view of an A3 portion shown in FIG. 22.
FIG. 24 is a schematic view showing a blank for manufacturing the impact-absorbing member according to the third embodiment.
FIG. 25 is a schematic view showing a modified example of a blank.
FIG. 26 is a partially enlarged view of an impact-absorbing member formed from the blank shown in FIG. 25.
FIG. 27 is a perspective view showing a structure of an automobile door to which a reinforcing member extending in a horizontal direction is further attached.

### DESCRIPTION OF EMBODIMENTS

Hereinafter, the present invention will be described in detail based on the embodiments. In the present specification and the drawings, like constituent elements having substantially the same functional configuration are denoted by like reference numerals, and overlapping description will be omitted.

In the following description, "integrated and connected" means a form in which separate members are connected to each other by welding or the like. For example, in a case where two steel sheets for blanks are joined by lap welding (spot welding, laser welding, or the like), it is expressed as "two steel sheets for blanks are integrated and connected". In addition, there are cases where a blank in which a plurality of steel sheets for blanks, which are different in at least one of sheet thickness and strength, or have the same sheet thickness and strength, are integrated and connected as described above is referred to as a tailored blank. The tailored blank is regarded as a single blank.

The term "continuously connected" means a form in which different portions of a single member are continuously connected. For example, a T-shaped blank in a plan view obtained by punching a single sheet material is expressed as "two linear portions are continuously connected". In addition, there are cases where a single blank continuously connected as described above is referred to as a single-piece blank.

### (First Embodiment)

Hereinafter, an impact-absorbing member 10 for an automobile door according to a first embodiment of the present invention (hereinafter, referred to as the impact-absorbing member 10) will be described.

The impact-absorbing member 10 according to the present embodiment is a member that is manufactured by press-forming a single-piece blank 100 made of steel and is attached to an automobile door 1.

The automobile door 1 is a front door disposed in a side portion of an automobile.

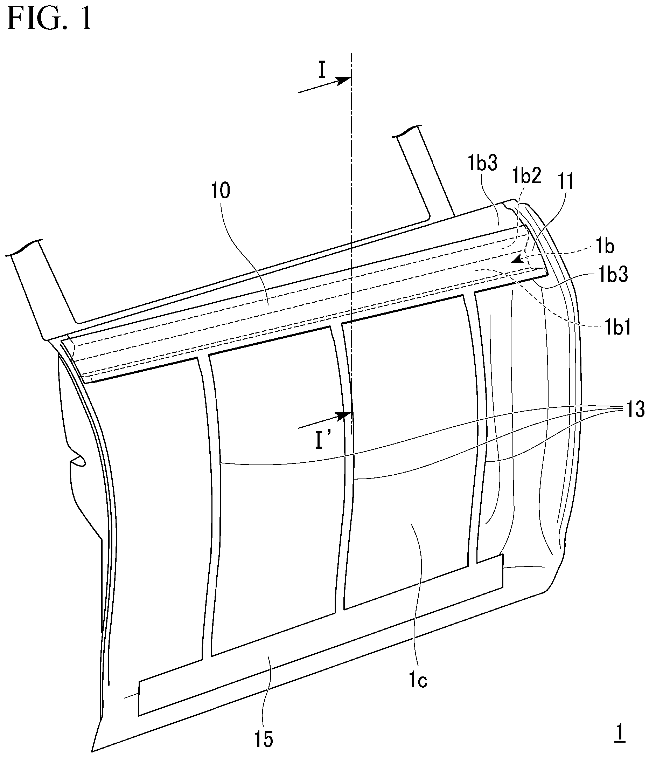

FIG. 1 is a perspective view showing a structure of the automobile door 1 to which the impact-absorbing member 10 is attached, and shows a state of the automobile door 1 viewed from an outside of the automobile. For convenience of description, an exterior panel 1a, which will be described later, is not shown in FIG. 1.

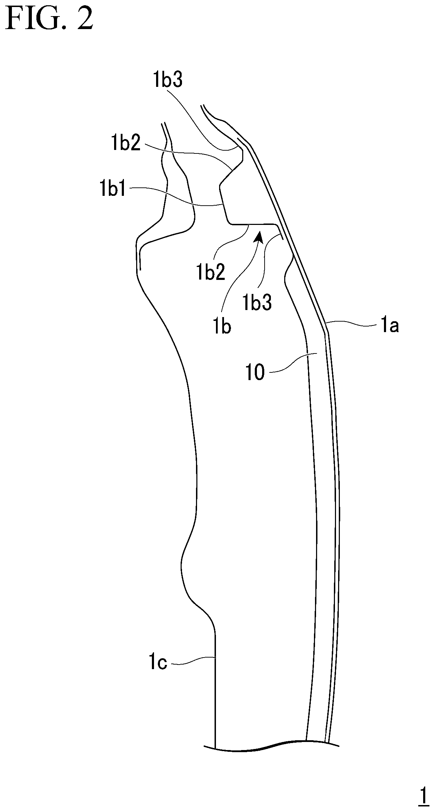

In addition, FIG. 2 is a schematic view showing a cross section taken along one-dot chain line I-I' of FIG. 1.

As shown in FIGS. 1 and 2, the automobile door 1 includes the exterior panel 1a, a reinforcing member 1b, and an interior panel 1c.

As the exterior panel 1a of the automobile door 1, a high strength steel sheet having a tensile strength of 340 MPa or more is preferably applied for the purpose of a reduction in weight.

In addition, a sheet thickness of the exterior panel 1a is preferably set to 0.6 mm or less from the viewpoint of a reduction in weight.

The sheet thickness of the exterior panel 1a is preferably as small as possible from the viewpoint of a reduction in weight. On the other hand, a small sheet thickness results in a decrease in panel rigidity. In a case where the sheet thickness of the exterior panel 1a is 0.3 mm or less, it is necessary to provide the impact-absorbing member 10 over a wide area to ensure panel rigidity, which leads to an increase in weight. Therefore, the sheet thickness of the exterior panel 1a is preferably 0.3 mm or more.

As shown in FIGS. 1 and 2, the reinforcing member 1b extends along a horizontal direction (an automobile front and rear direction in the present embodiment) between the exterior panel 1a and the interior panel 1c of the automobile door 1. The reinforcing member 1b is required to have high bending rigidity in order to absorb an impact during a side collision and to reinforce the vicinity of an opening part for raising and lowering a window glass.

As shown in FIG. 2, the reinforcing member 1b has a hat-shaped open cross section. That is, the reinforcing member 1b includes a top sheet portion 1b1, a pair of side wall portions 1b2 bent and connected from end portions of the top sheet portion 1b1, and a pair of flange portions 1b3 bent and connected from end portions of the side wall portions 1b2.

The reinforcing member 1b is attached to the automobile door 1 in such a manner that the top sheet portion 1b1 faces the interior panel 1c.

The reinforcing member 1b may include a joint member that is welded to connect the pair of flange portions 1b3 to each other. In this case, the reinforcing member 1b can further increase the bending rigidity by forming a closed cross-sectional structure having an axis in the horizontal direction.

As a material of the reinforcing member 1b, various materials such as steel, stainless steel, aluminum, an aluminum alloy, and carbon fiber reinforced plastic (CFRP) can be used.

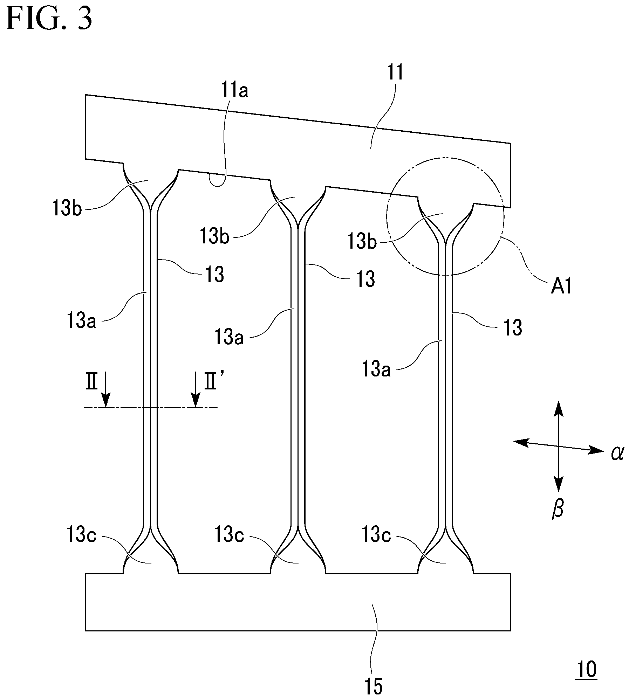

FIG. 3 is a schematic view of the impact-absorbing member 10 when viewed from an inside of the automobile toward the outside. As shown in FIG. 3, the impact-absorbing member 10 according to the present embodiment includes a first connection band portion 11, three connected portions 13, and a second connection band portion 15.

As shown in FIG. 1, the impact-absorbing member 10 is attached along an inner surface of the exterior panel 1a of the automobile door 1 in a posture in which the first connection band portion 11 extends in a substantially horizontal direction, and the connected portion 13 extends in a substantially vertical direction (in the case of the present embodiment, in an automobile height direction).

In the following description, a direction in which the first connection band portion 11 extends, that is, a longitudinal direction of the first connection band portion 11, is referred to as a first direction α. In addition, a direction in which the connected portion 13 extends, that is, a direction intersecting the first direction α, is referred to as a second direction β.

A sheet thickness of the impact-absorbing member 10 is preferably 0.6 mm or more and 2.0 mm or less.

In a case where the sheet thickness of the impact-absorbing member 10 is 2.0 mm or less, the impact-absorbing member 10 can be reduced in weight. The sheet thickness of the impact-absorbing member 10 is more preferably 1.2 mm or less.

On the other hand, in a case where the sheet thickness of the impact-absorbing member 10 is 0.6 mm or more, impact-absorbing performance of the impact-absorbing member 10 can be secured, and bending rigidity of the first connection band portion 11 can be sufficiently secured. Therefore, the work of attaching the impact-absorbing member 10 to the automobile door 1 can be more easily performed.

The impact-absorbing member 10 preferably has a tensile strength of 1,100 MPa or more, measured in the connected portion 13, from the viewpoint of a reduction in weight.

Here, the tensile strength refers to a tensile strength measured from a test piece collected from a portion of the connected portion 13, excluding portions where strength locally changes, such as bent portions or welded portions.

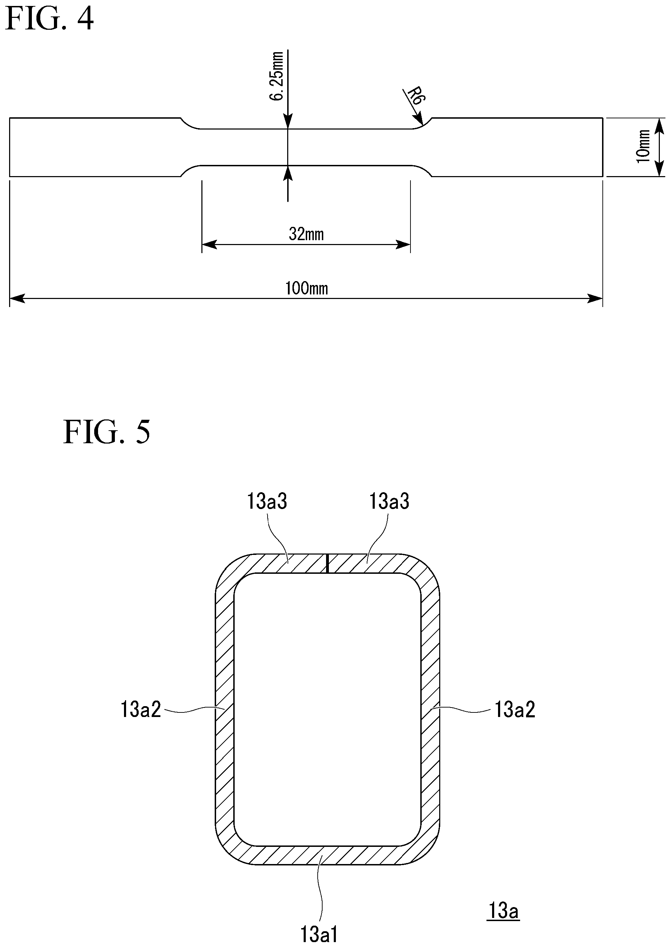

As the test piece, a test piece having dimensions shown in FIG. 4 is used. A sheet thickness of the test piece remains the same as the sheet thickness collected from the member. The tensile strength is measured by conducting a tensile test at a tensile speed (cross-head displacement speed) of 10 mm/min according to JIS Z 2241 (2011).

In addition, in the impact-absorbing member 10, from the viewpoint of a reduction in weight, a Vickers hardness measured at the connected portion 13 is preferably 350 HV or more.

Here, the Vickers hardness is measured in the connected portion 13 at positions of five points separated by 10 mm or more from portions excluding the portions where hardness locally changes, such as bent portions or welded portions, according to the Vickers hardness test method specified in JIS Z 2244-1:2020.

The Vickers hardness is measured at five points, separated by 1.0 mm or more, on a cut surface at a position at a separation distance of 1/4 of the sheet thickness in a sheet thickness direction from a surface, with a load (test force) of 9.8 N.

An average value of the Vickers hardnesses measured at these five points is defined as the Vickers hardness of the connected portion 13.

A method for manufacturing the impact-absorbing member 10 includes a second step involving hot stamping, which will be described later. Therefore, the impact-absorbing member 10 substantially has a martensitic structure.

The first connection band portion 11 is a portion that continuously connects the three connected portions 13. The first connection band portion 11 is attached to the automobile door 1 by welding or the like.

Here, as shown in FIGS. 1 and 2, the first connection band portion 11 is preferably welded and attached to connect the pair of flange portions 1b3 of the reinforcing member 1b having a hat-shaped open cross section to each other.

As described above, the reinforcing member 1b can obtain an effect of increasing the bending rigidity by attaching the joint member to connect the pair of flange portions 1b3 to each other and thus forming the closed cross-sectional structure.

Meanwhile, by employing a configuration in which the first connection band portion 11 is welded to connect the pair of flange portions 1b3, the closed cross-sectional structure is formed without increasing the number of components, thereby obtaining the effect of increasing the bending rigidity. Therefore, the automobile door 1 can be further reduced in weight, and can be manufactured at an even lower cost.

The first connection band portion 11 may be attached to only a part of the reinforcing member 1b, for example, only the flange portion 1b3 on a lower end side (a portion attached to the flange portion 1b3 on the lower end side in the case where the joint member is attached).

The connected portion 13 is a portion extending along the second direction β from an end edge 11a of the first connection band portion 11 in a width direction (a direction perpendicular to the first direction α).

As shown in FIG. 3, the connected portion 13 includes an impact-absorbing portion 13a, a first transition portion 13b, and a second transition portion 13c.

FIG. 5 is a schematic view showing a cross section taken along one-dot chain line II-II' of FIG. 3, that is, a cross section of the impact-absorbing portion 13a perpendicular to the second direction β.

As shown in FIG. 5, the impact-absorbing portion 13a has a closed cross-sectional structure. That is, the impact-absorbing portion 13a includes a bottom surface 13a1, a pair of side wall surfaces 13a2 bent and connected from end portions of the bottom surface 13a1, and two top surfaces 13a3 bent and connected from end portions of the side wall surfaces 13a2.

In addition, end edges of the two top surfaces 13a3 are brought into contact with each other or joined to each other to form a closed cross-sectional structure.

In the present application, even in a case where a gap of 3 mm or less is formed between the end edges of the two top surfaces 13a3, the structure can also be regarded as a closed cross-sectional structure.

When a load is applied to the impact-absorbing portion 13a in a direction from the outside to the inside of the automobile, the cross section of the impact-absorbing portion 13a deforms in a direction in which the end edges of the top surfaces 13a3 are brought into contact with each other due to bending deformation of the impact-absorbing portion 13a, thereby closing the gap.

By the impact-absorbing portion 13a having a closed cross-sectional structure, panel rigidity can be imparted to the exterior panel 1a, and at the same time, an amount of impact absorbed when the automobile door 1 receives an impact due to a collision can be increased.

A cross-sectional shape may be circular, elliptical, trapezoidal, or the like, but a rectangular closed cross-sectional structure is preferably adopted to further increase the amount of absorbed impact.

The impact-absorbing portion 13a is provided so that at least a part of the bottom surface 13a1 is joined along the inner surface of the exterior panel 1a. Accordingly, the panel rigidity can be imparted to the exterior panel 1a, and at the same time, the amount of impact absorbed when the automobile door 1 receives an impact due to a collision can be increased.

The bottom surface 13a1 and the inner surface of the exterior panel 1a may be joined using an adhesive such as mastic sealer.

The impact-absorbing portion 13a is formed up to the second transition portion 13c of the connected portion 13, and three second transition portions 13c are continuously connected to the second connection band portion 15.

As shown in FIG. 1, the second connection band portion 15 abuts on and is attached to a lower end of the interior panel 1c of the automobile door 1 by welding or the like.

In a case where the second connection band portion 15 is not provided, each of tip ends (lower ends) of the three connected portions 13 may be attached to the lower end of the interior panel 1c of the automobile door 1 by welding or the like.

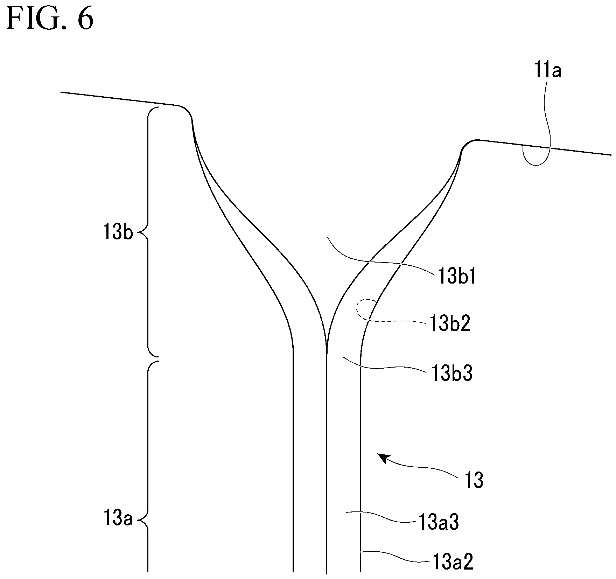

FIG. 6 is an enlarged view of an A1 portion shown in FIG. 3. As shown in FIG. 6, the first transition portion 13b extends along the second direction β from the end edge 11a of the first connection band portion 11 in the width direction. The first transition portion 13b is processed to gradually approach the cross-sectional shape of the impact-absorbing portion 13a in a direction away from the first connection band portion 11.

As shown in FIGS. 5 and 6, the first transition portion 13b includes a bottom surface 13b1 continuously connected to the bottom surface 13a1 of the impact-absorbing portion 13a, a side wall surface 13b2 continuously connected to the side wall surface 13a2 of the impact-absorbing portion 13a, and a top surface 13b3 continuously connected to the top surface 13a3 of the impact-absorbing portion 13a.

Since the impact-absorbing member 10 according to the present embodiment is a member formed from the single-piece blank 100, the bottom surface 13b1 is continuously connected to the first connection band portion 11. That is, there is no physical boundary line such as a joint mark between the bottom surface 13b1 and the first connection band portion 11.

In the first transition portion 13b, since the first connection band portion 11 having a flat sheet shape and the impact-absorbing portion 13a, which is a closed cross-sectional structure, are connected with a gentle change in cross section, the occurrence of cracking during the processing of the impact-absorbing portion 13a can be suppressed.

According to the impact-absorbing member 10 according to the present embodiment, since the impact-absorbing portion 13a having a closed cross-sectional structure is formed, excellent panel rigidity and impact resistance performance can be exhibited with a small weight.

In addition, since the first connection band portion 11 and the three connected portions 13 are continuously connected by press-forming the single-piece blank 100 into the impact-absorbing member 10, a step of joining the first connection band portion 11 and the connected portions 13 after the press-forming is not necessary.

In addition, the number of components and the number of forming tools can be reduced compared to a case where the first connection band portion 11 and the three connected portions 13 are separately processed.

Furthermore, since the first connection band portion 11 and the three connected portions 13 do not need to be separately processed and joined by welding, cracking or the like caused by a HAZ-softened portion formed during welding can be avoided.

In addition, when attaching the impact-absorbing member 10 to the automobile door 1, the impact-absorbing member 10 may be attached to the automobile door 1 as a single member. Therefore, the attachment work is simpler than in a case where each member is transported and positioned separately.

Therefore, according to the impact-absorbing member 10 according to the present embodiment, it is possible to manufacture the automobile door 1 capable of exhibiting excellent panel rigidity and impact resistance performance at low cost.

Next, the method for manufacturing the impact-absorbing member 10 will be described.

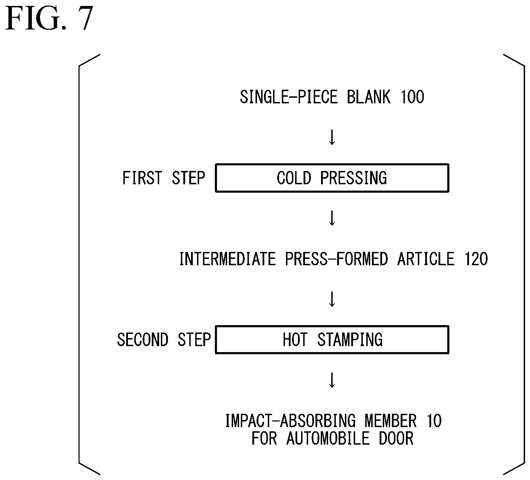

FIG. 7 is a diagram for describing steps for manufacturing the impact-absorbing member 10.

The impact-absorbing member 10 can be manufactured by performing a first step of press-forming the single-piece blank 100 in a cold state to obtain an intermediate press-formed article 120, and a second step of hot-stamping the intermediate press-formed article 120, and further performing trimming as necessary.

The single-piece blank 100 can be obtained by punching a single steel sheet for a blank.

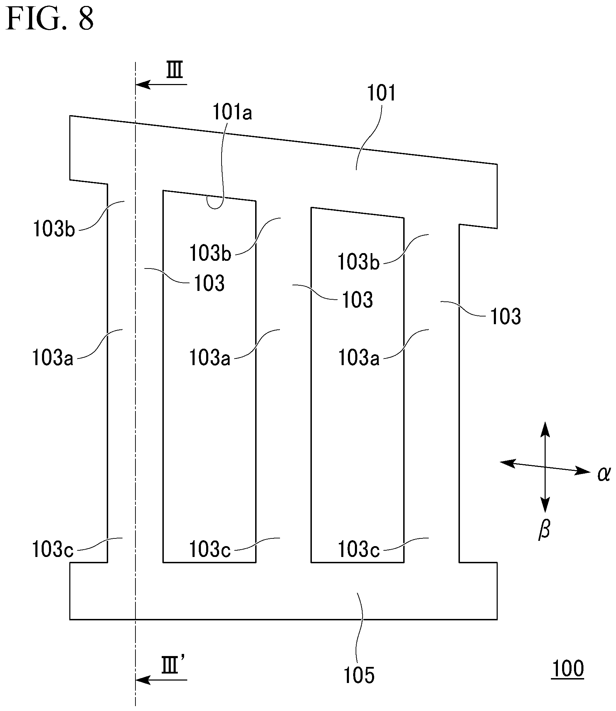

FIG. 8 is a schematic view of the single-piece blank 100.

The single-piece blank 100 includes a first connection band portion forming region 101 that is formed into the first connection band portion 11 through a pressing step, three connected portion forming regions 103 that are formed into the three connected portions 13 through the pressing step, and a second connection band portion forming region 105 that is formed into the second connection band portion 15 through the pressing step.

In addition, the connected portion forming region 103 includes an impact-absorbing portion forming region 103a that is formed into the impact-absorbing portion 13a through the pressing step, a first transition portion forming region 103b that is formed into the first transition portion 13b through the pressing step, and a second transition portion forming region 103c that is formed into the second transition portion 13c through the pressing step.

Since the single-piece blank 100 is obtained by punching a single steel sheet for a blank, the first connection band portion forming region 101, the connected portion forming regions 103, and the second connection band portion forming region 105 are continuously connected to each other.

A sheet thickness of the single-piece blank 100 is preferably 0.6 mm or more and 2.0 mm or less, similar to the sheet thickness of the impact-absorbing member 10.

The single-piece blank 100 is preferably 800 MPa or less in order to prevent the occurrence of cracking in the first step by cold pressing.

### (First Step)

In the first step, the single-piece blank 100 is press-formed in a cold state to obtain the intermediate press-formed article 120. In the example described here, the intermediate press-formed article 120 is manufactured by two cold press formings.

The press forming in a cold state means performing press forming at room temperature.

### (Forming by First Forming Tool)

First, the single-piece blank 100 is formed into a member 110 using a first forming tool 1000.

Specifically, the connected portion forming region 103 of the single-piece blank 100 is formed into a connected portion forming region 113 of the member 110.

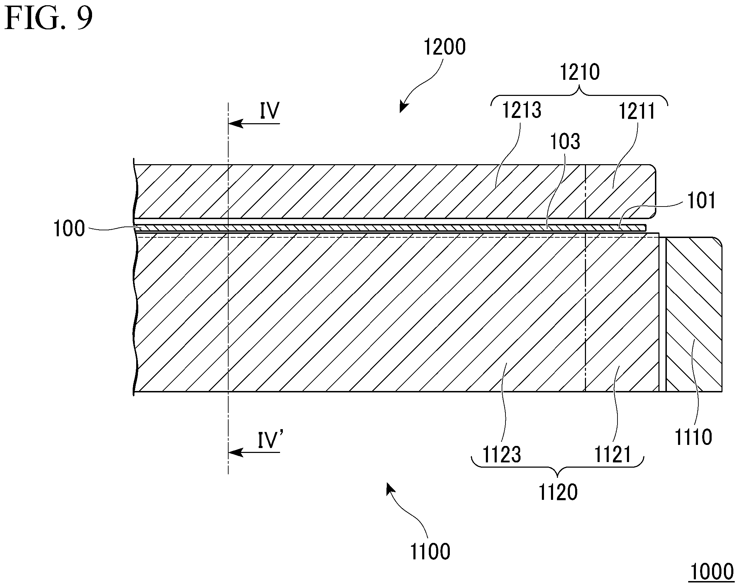

FIG. 9 is a schematic view showing a state in which the single-piece blank 100, shown in a cross section taken along one-dot chain line III-III' of FIG. 8, is installed in the first forming tool 1000.

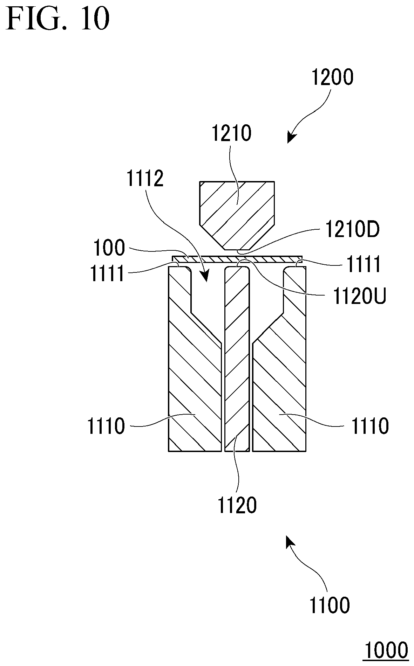

FIG. 10 is a schematic view showing a cross section taken along one-dot chain line IV-IV' of FIG. 9.

As shown in FIGS. 9 and 10, the first forming tool 1000 is constituted by a lower forming tool 1100 and an upper forming tool 1200.

The lower forming tool 1100 includes a lower body 1110 and a pad 1120. The pad 1120 is movable up and down independently of the lower body 1110 by being connected to, for example, a pressurizing device (not shown) disposed below the lower body 1110.

The lower body 1110 has a placement surface 1111 on which the single-piece blank 100 is placed and a groove portion 1112 formed to be recessed from the placement surface 1111.

The pad 1120 is provided in the groove portion 1112 of the lower body 1110 so that a top surface 1120U thereof faces a lower surface of the single-piece blank 100.

As shown in FIG. 9, the pad 1120 has a structure in which a first portion 1121 for placing the first connection band portion forming region 101 of the single-piece blank 100 and a second portion 1123 for placing the connected portion forming region 103 of the single-piece blank 100 are integrally formed.

The upper forming tool 1200 has an upper body 1210.

The upper body 1210 has a convex shape corresponding to the groove portion 1112 of the lower body 1110. The upper body 1210 is provided so that a bottom surface 1210D thereof faces an upper surface of the single-piece blank 100.

An upper end of the upper body 1210 is movable up and down by being connected to a drive mechanism (not shown).

As shown in FIG. 9, the upper body 1210 has a structure in which a first portion 1211, which faces the first connection band portion forming region 101 of the single-piece blank 100, and a second portion 1213, which faces the connected portion forming region 103 of the single-piece blank 100, are integrally formed.

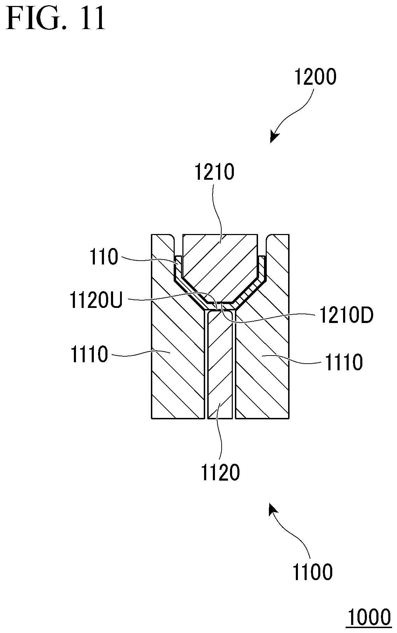

FIG. 11 is a schematic view showing a state in which the upper forming tool 1200 is lowered to a bottom dead point in the first forming tool 1000 shown in FIG. 10.

As shown in FIG. 11, the single-piece blank 100 can be press-formed into the member 110 by lowering the upper body 1210 to the bottom dead point.

As the upper body 1210 is lowered, a widthwise center portion in the impact-absorbing portion forming region 103a of the single-piece blank 100 enters a state of being sandwiched between the bottom surface 1210D of the upper body 1210 and the top surface 1120U of the pad 1120. Then, as the upper body 1210 is further lowered from this state, the pad 1120 follows the lowering, and the press forming progresses in a state in which the single-piece blank 100 is sandwiched between the top surface 1120U and the bottom surface 1210D, thereby forming the member 110.

### (Forming by Second Forming Tool)

Next, the member 110 press-formed with the first forming tool is formed into the intermediate press-formed article 120 using a second forming tool 2000.

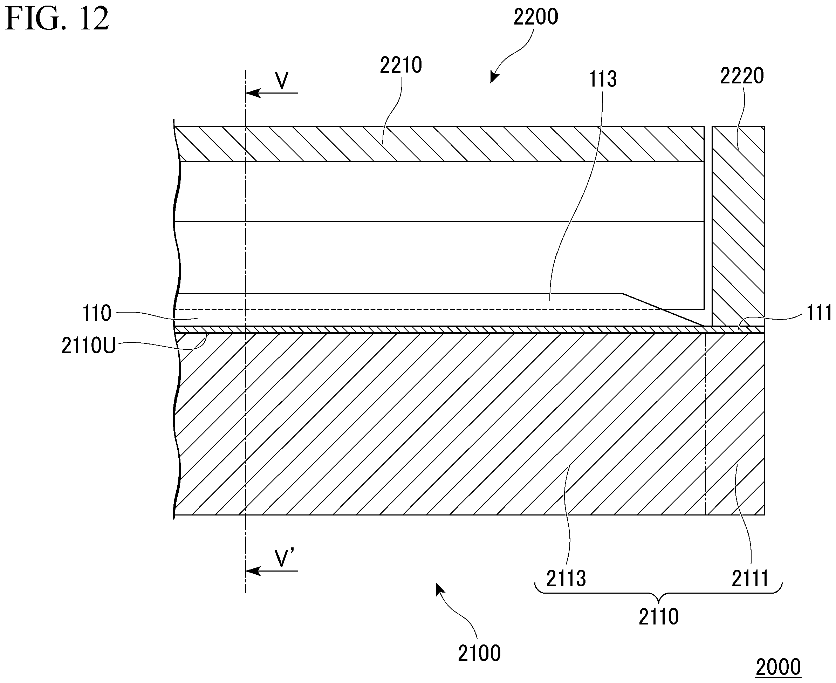

FIG. 12 is a schematic view showing a state in which the member 110 is installed in the second forming tool 2000.

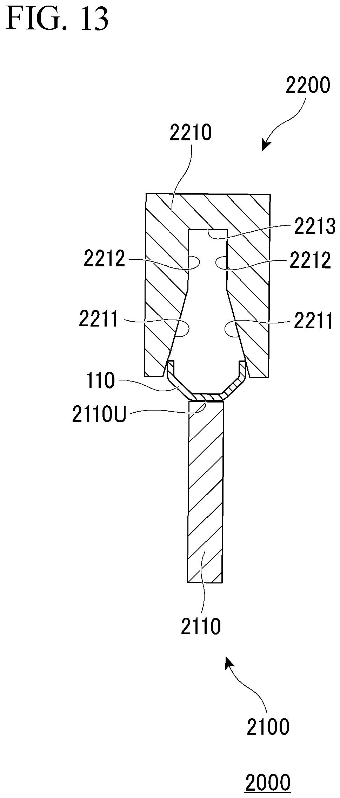

FIG. 13 is a schematic view showing a cross section taken along one-dot chain line V-V' of FIG. 12.

As shown in FIGS. 12 and 13, the second forming tool 2000 is constituted by a lower forming tool 2100 and an upper forming tool 2200.

The lower forming tool 2100 includes a lower body 2110. The lower body 2110 has a top surface 2110U on which the member 110 is placed.

As shown in FIG. 12, the lower body 2110 has a structure in which a first portion 2111 for placing a bottom surface of the first connection band portion forming region 111 of the member 110 and a second portion 2113 for placing a bottom surface of the connected portion forming region 113 of the member 110 are integrally formed.

As shown in FIG. 12, the upper forming tool 2200 includes an upper body 2210 and a pad 2220. The pad 2220 is movable up and down independently of the upper body 2210 by being connected to, for example, a pressurizing device (not shown) disposed above the upper body 2210.

As shown in FIG. 13, the upper body 2210 has an inverted U-shaped depression formed by an inclined surface 2211, a standing wall surface 2212, and a ceiling surface 2213. An upper end of the upper body 2210 is movable up and down by being connected to a drive mechanism (not shown). The upper body 2210 is provided above the second portion 2113 of the lower body 2110. That is, the member 110 is installed above a position of the connected portion forming region 113.

The pad 2220 is provided above the first portion 2111 of the lower body 2110. That is, the pad 2220 is installed above a position of the first connection band portion forming region 111 of the member 110.

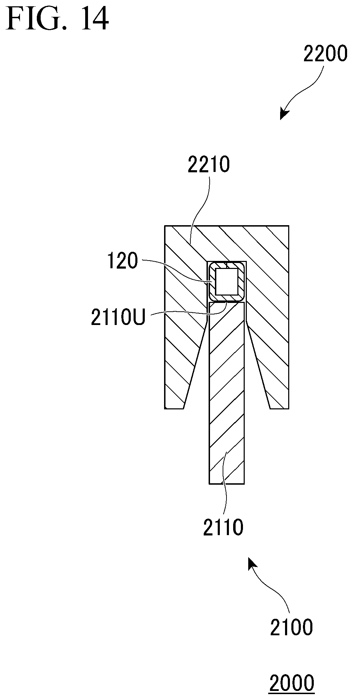

FIG. 14 is a schematic view showing a state in which the upper forming tool 2200 is lowered to a bottom dead point in the second forming tool 2000 shown in FIG. 13.

The member 110 can be press-formed into the intermediate press-formed article 120 by lowering the upper body 2210 the bottom dead point in a state in which the first connection band portion forming region 111 of the member 110 is sandwiched between the first portion 2111 of the lower body 2110 and the pad 2220.

As the upper body 2210 is lowered, an end edge of a "portion corresponding to the top surface 13a3" of the member 110 comes into contact with the inclined surface 2211 of the upper body 2210.

As the upper body 2210 is further lowered, the end edge of the "portion corresponding to the top surface 13a3" slides on the inclined surface 2211 while press forming progresses, thereby forming the intermediate press-formed article 120.

### (Second Step)

In the second step, the intermediate press-formed article 120, which is in a state of being heated to a temperature of an Ac3 point or higher, is formed into the impact-absorbing member 10 using a third forming tool 3000.

To heat the intermediate press-formed article 120, heating using a heating furnace or energization heating can be used. However, heating using a heating furnace is preferable because temperature control is easy and uniform heating can be achieved even for complex shapes. Examples of the heating furnace include a gas heating furnace, an electric heating furnace, an infrared heating furnace, and a high-frequency heating furnace.

The Ac3 point is a temperature at which steel is austenitized, and is represented by the following formula as an example.

Ac3 point (°C) = 910 - 203 × √C (mass%) - 30 × Mn (mass%) - 11 × Cr (mass%) + 44.7 × Si (mass%) + 400 × Al (mass%) + 700 × P (mass%) - 15.2 × Ni (mass%) - 20 × Cu (mass%) + 400 × Ti (mass%) + 104 × V (mass%) + 31.5 × Mo (mass%)

In the above formula, C, Mn, Cr, Si, Al, P, Ni, Cu, Ti, V, and Mo are amounts of chemical components of the steel constituting the connected portion forming region 103.

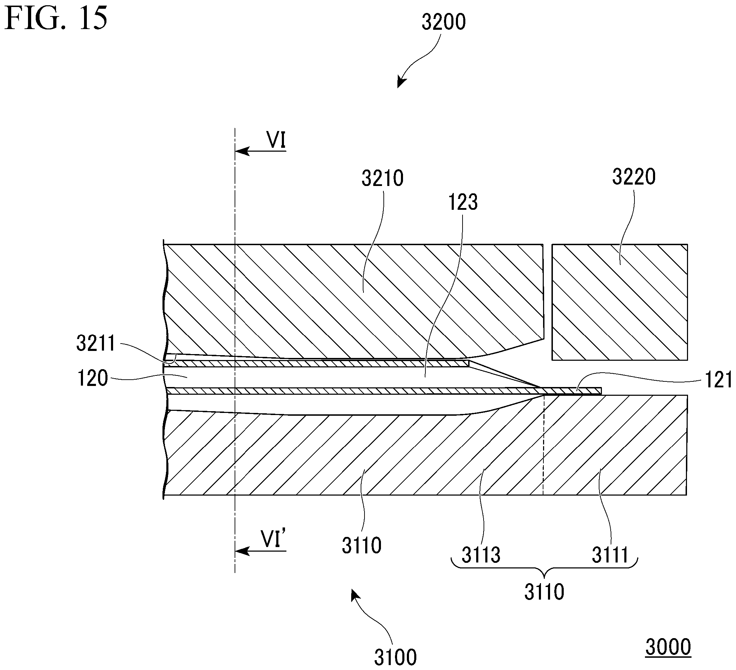

FIG. 15 is a schematic view showing a state in which the intermediate press-formed article 120 is installed in the third forming tool 3000.

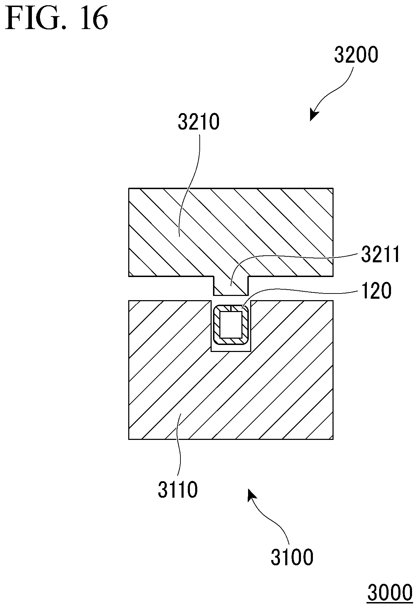

FIG. 16 is a schematic view showing a cross section taken along one-dot chain line VI-VI' of FIG. 15.

As shown in FIGS. 15 and 16, the third forming tool 3000 is constituted by a lower forming tool 3100 and an upper forming tool 3200.

The lower forming tool 3100 includes a lower body 3110. The lower body 3110 has a depression with a shape corresponding to the impact-absorbing member 10.

As shown in FIG. 15, the lower body 3110 has a structure in which a first portion 3111 for placing the first connection band portion forming region 121 of the intermediate press-formed article 120 and a second portion 3113 above which the connected portion forming region 123 of the intermediate press-formed article 120 is disposed are integrally formed.

The upper forming tool 3200 includes an upper body 3210 and a pad 3220.

The upper body 3210 has a protrusion portion 3211 with a shape corresponding to the depression of the lower body 3110.

As shown in FIG. 15, the pad 3220 is installed above a portion corresponding to the first connection band portion forming region 121 of the intermediate press-formed article 120. The pad 3220 is movable up and down independently of the upper body 3210 by being connected to, for example, a pressurizing device (not shown) disposed above the upper body 3210.

The lower forming tool 3100 and the upper forming tool 3200 include a built-in cooling mechanism that uses a cooling medium such as water.

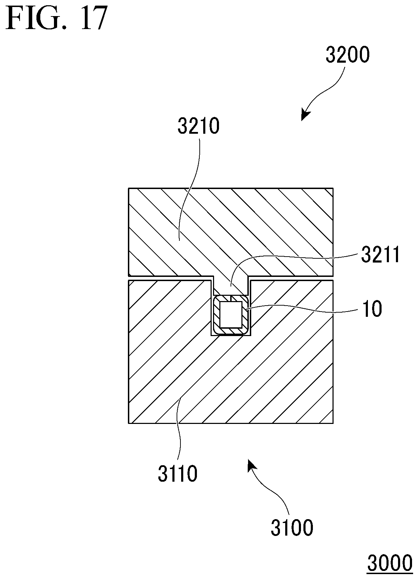

FIG. 17 is a schematic view showing a state in which the upper forming tool 3200 is lowered to a bottom dead point in the third forming tool 3000 shown in FIG. 16.

The upper forming tool 3200 is lowered to the bottom dead point in a state in which the intermediate press-formed article 120, which is in a state of being heated to a temperature of Ac3 point or higher in advance, is placed on the lower forming tool 3100, thereby obtaining the impact-absorbing member 10.

Since the cooling mechanism is built in the lower forming tool 3100 and the upper forming tool 3200, the intermediate press-formed article 120 in the heated state can be more efficiently quenched by being held at the bottom dead point in the press forming.

The cooling of the formed article while being held at the bottom dead point may be achieved by cooling with a forming tool cooled by a cooling medium, or by direct cooling with a cooling medium supplied from a forming surface of a forming tool. More efficient quenching can be achieved by direct cooling with a cooling medium.

The cooling mechanism of the forming tool may not be provided.

In addition, a member from which unnecessary parts are cut by performing trimming as necessary after the press forming is completed may be used as the impact-absorbing member 10.

According to the method for manufacturing the impact-absorbing member 10 using the single-piece blank 100 as described above, there is no need to weld the first connection band portion 11 and the connected portion 13 after the press forming.

In addition, a plurality of the impact-absorbing portions 13a can be formed as a single impact-absorbing member 10 and assembled to the automobile door 1. Therefore, the impact-absorbing member 10 can be manufactured efficiently at low cost.

### (Second Embodiment)

Hereinafter, an impact-absorbing member 20 for an automobile door according to a second embodiment of the present invention (hereinafter, referred to as the impact-absorbing member 20) will be described.

The impact-absorbing member 10 according to the first embodiment is a member manufactured by press-forming the single-piece blank 100 made of steel, but the impact-absorbing member 20 according to the second embodiment differs from the first embodiment in that the impact-absorbing member 20 is a member manufactured by press-forming a tailored blank 200 made of steel.

For simplification of the description, overlapping descriptions with the first embodiment are omitted.

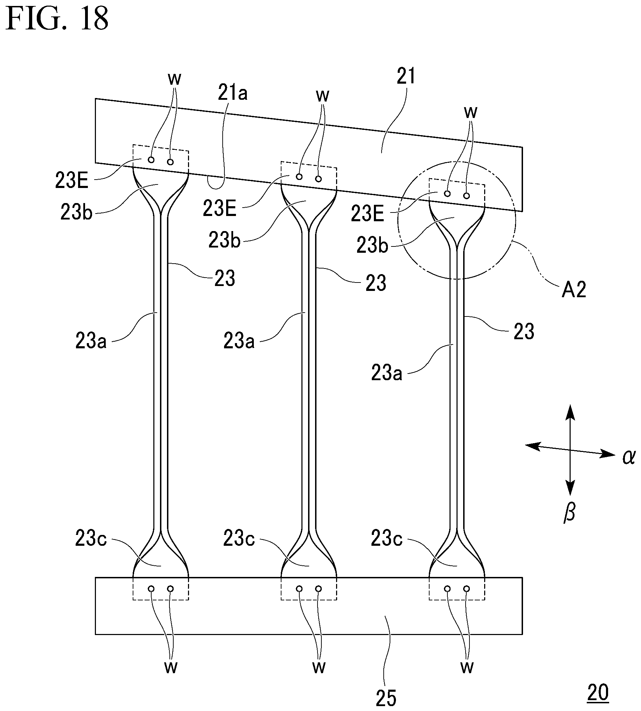

FIG. 18 is a schematic view of the impact-absorbing member 20. As shown in FIG. 18, the impact-absorbing member 20 according to the present embodiment includes a first connection band portion 21, three connected portions 23, and a second connection band portion 25.

A preferable sheet thickness, tensile strength, and Vickers hardness of the impact-absorbing member 20 are the same as the ranges described for the impact-absorbing member 10 according to the first embodiment. However, since the impact-absorbing member 20 is formed using the tailored blank 200, different sheet thicknesses, tensile strengths, and Vickers hardnesses can be adopted between the first connection band portion 21, the three connected portions 23, and the second connection band portion 25.

The impact-absorbing member 20 may have a martensitic structure. More specifically, at least one of the first connection band portion 21, the connected portion 23, and the second connection band portion 25 of the impact-absorbing member 20 may have a substantially martensitic structure.

The first connection band portion 21 is a portion that overlaps each of the three connected portions 23 and is integrated and connected thereto at spot-welded portions w. The first connection band portion 21 is attached to the automobile door 1 by welding or the like.

The spot-welded portion w is an example of the welded portion. The welded portion is preferably formed by spot welding from the viewpoint of workability, but the welded portion may be a linear welded portion formed by laser welding or plasma welding.

Instead of the welded portion, a joint portion formed by a rivet or the like may also be used.

The connected portion 23 is a portion extending along the second direction β from an end edge 21a of the first connection band portion 21 in a width direction (a direction perpendicular to the first direction α).

As shown in FIG. 18, the connected portion 23 includes an impact-absorbing portion 23a, a first transition portion 23b, and a second transition portion 23c.

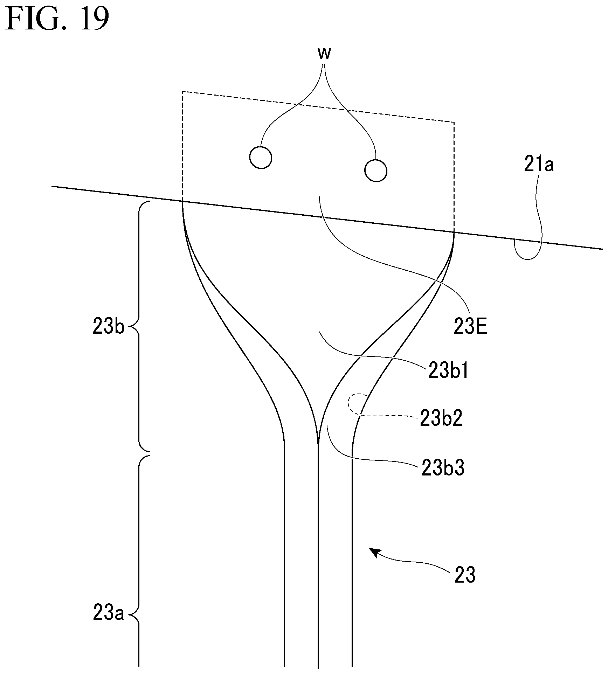

FIG. 19 is an enlarged view of an A2 portion shown in FIG. 18. As shown in FIG. 19, the first transition portion 23b extends along the second direction β from the end edge 21a of the first connection band portion 21 in the width direction. The first transition portion 23b is processed to gradually approach a cross-sectional shape of the impact-absorbing portion 23a in a direction away from the first connection band portion 21.

As shown in FIG. 19, the first transition portion 23b includes a bottom surface 23b1 continuously connected to the impact-absorbing portion 23a, a side wall surface 23b2, and a top surface 23b3.

In the impact-absorbing member 20 according to the present embodiment, an overlapping surface 23E, which overlaps with the first connection band portion 21, is continuously connected to an end portion of the bottom surface 23b1. The overlapping surface 23E is connected to the first connection band portion 21 at the spot-welded portion w.

In the first transition portion 23b, since the first connection band portion 21 having a flat sheet shape and the impact-absorbing portion 23a, which is a closed cross-sectional structure, are connected with a gentle change in cross section, the occurrence of cracking during the processing of the impact-absorbing portion 23a can be suppressed.

In addition, since the overlapping surface 23E continuously connected to the first transition portion 23b overlaps with the first connection band portion 21, an effect of increasing bending rigidity and strength of the first connection band portion 21 can also be obtained.

According to the impact-absorbing member 20 of the present embodiment, since the impact-absorbing portion 23a having a closed cross-sectional structure is formed, excellent panel rigidity and impact resistance performance can be exhibited with a small weight.

In addition, since the first connection band portion 21 and the three connected portions 23 are integrated and connected by press-forming the tailored blank 200 into the impact-absorbing member 20, a step of joining the first connection band portion 21 and the connected portions 23 after the press-forming is not necessary.

In addition, the number of components and the number of forming tools can be reduced compared to a case where the first connection band portion 21 and the three connected portions 23 are separately processed.

Furthermore, in a case where hot stamping is selected in a second step, which will be described later, a HAZ-softened portion formed in the spot-welded portion w of the tailored blank 200 can be reduced or eliminated by heat input during the hot stamping, so that cracking or the like caused by the HAZ-softened portion can also be suppressed.

In the present application, the HAZ-softened portion refers to a point where a metallographic structure changes due to an effect of a thermal cycle during welding and a hardness is reduced by 20% or more compared to that of a base material portion, in a peripheral region (regions in both members subjected to welding) of the welded portion (weld line). Specifically, the change in the metallographic structure refers to a transformation to tempered martensite due to tempering or a transformation to a mixed structure containing ferrite due to cooling from a ferrite-austenite dual phase region.

The absence of the HAZ-softened portion can be confirmed by the following procedure.

First, a Vickers hardness of the base material portion is measured at positions of five points separated by 10 mm or more from a center point of the welded portion (or a centerline of the weld line) according to the Vickers hardness test method specified in JIS Z 2244-1:2020. Specifically, the Vickers hardness is measured at five points, separated by 1.0 mm or more, on a cut surface including the welded portion at a position at a distance of 1/4 of the sheet thickness in a sheet thickness direction from a surface, with a load (test force) of 9.8 N. An average value of the Vickers hardnesses measured at these five points is defined as the Vickers hardness of the base material portion.

Next, the Vickers hardness is measured in a region within 10 mm from the center point of the welded portion (the centerline of the weld line) on the cut surface including the welded portion at a position at a distance of 1/4 of the sheet thickness in the sheet thickness direction from the surface, with a load (test force) of 3 N and a measurement pitch of 0.5 mm, according to the Vickers hardness test method specified in JIS Z 2244-1:2020. In the case of lap welding, the measurement is performed at a position at a distance of 1/4 of the sheet thickness from a surface of an overlapping side in the sheet thickness direction. In a case where a minimum value of the Vickers hardness is more than 80% of the Vickers hardness of the base material portion, it is determined that the HAZ-softened portion is not present.

In a case where cold pressing is selected in the second step described later, the HAZ-softened portion may be reduced or eliminated by a partial tempering heat treatment (for example, high-frequency heating, laser heating, or post energizing during spot welding) after spot welding.

In addition, when attaching the impact-absorbing member 20 to the automobile door 1, the impact-absorbing member 20 may be attached to the automobile door 1 as a single member. Therefore, the attachment work is simpler than in a case where each member is transported and positioned separately.

Therefore, according to the impact-absorbing member 20 according to the present embodiment, it is possible to manufacture the automobile door 1 capable of exhibiting excellent panel rigidity and impact resistance performance at low cost.

Next, a method for manufacturing the impact-absorbing member 20 will be described.

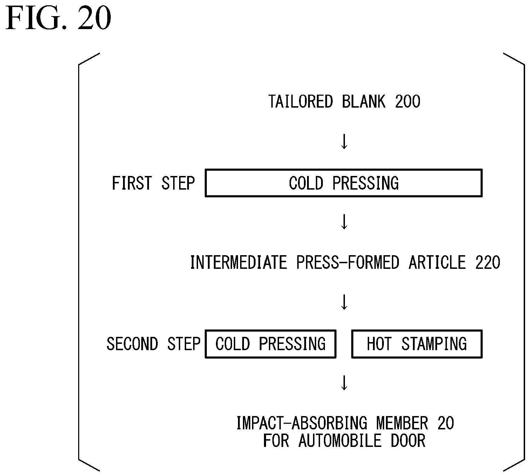

FIG. 20 is a diagram for describing steps for manufacturing the impact-absorbing member 20.

The impact-absorbing member 20 can be manufactured by performing a first step of press-forming the tailored blank 200 in a cold state to obtain an intermediate press-formed article, and a second step of cold-pressing or hot-stamping the intermediate press-formed article, and further performing trimming as necessary.

A connected portion forming region in the tailored blank 200 has an overlapping surface forming region that overlaps a part of a connection band portion forming region, and the joint portion is formed at the overlapping surface, so that the connection band portion forming region and the connected portion forming region are integrated and connected at the joint portion.

The method for manufacturing the impact-absorbing member 20 is substantially the same as the method for manufacturing the impact-absorbing member 10 according to the first embodiment except that the tailored blank 200 is used instead of the single-piece blank 100, and thus a detailed description thereof will be omitted.

In a case where the tailored blank 200 is used, a high strength steel sheet can be applied only to the impact-absorbing portion 23a, for example, by selecting the cold pressing in the second step. Therefore, it is possible to manufacture the automobile door 1 capable of exhibiting excellent panel rigidity and impact resistance performance, at a lower cost.

On the other hand, in a case where the tailored blank 200 is used, the HAZ-softened portion can be eliminated without performing the tempering heat treatment by selecting the hot stamping in the second step.

The tailored blank 200 can be obtained by integrating and connecting a plurality of steel sheets for blanks at spot-welded portions w.

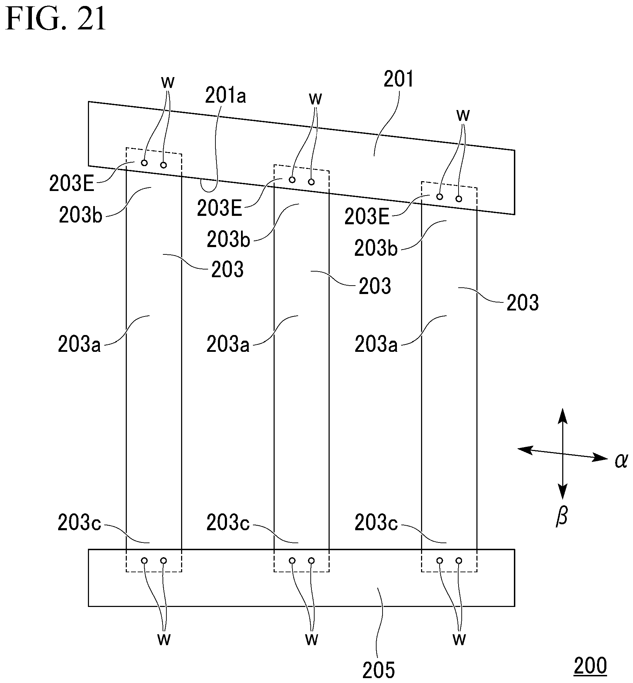

FIG. 21 is a schematic view of the tailored blank 200.

The tailored blank 200 includes a first connection band portion forming region 201 that is formed into the first connection band portion 21 through a pressing step, three connected portion forming regions 203 that are formed into the three connected portions 23 through the pressing step, and a second connection band portion forming region 205 that is formed into the second connection band portion 25 through the pressing step.

In addition, the connected portion forming region 203 includes an impact-absorbing portion forming region 203a that is formed into the impact-absorbing portion 23a through the pressing step, a first transition portion forming region 203b that is formed into the first transition portion 23b through the pressing step, and a second transition portion forming region 203c that is formed into the second transition portion 23c through the pressing step.

A sheet thickness and strength of the tailored blank 200 may be in the same range as the sheet thickness and the strength of the single-piece blank 100 described in the first embodiment.

However, since the tailored blank 200 can be obtained by overlapping a plurality of steel sheets for blanks, different sheet thicknesses, strengths, and compositions can be adopted between the first connection band portion forming region 201, the three connected portion forming regions 203, and the second connection band portion forming region 205. In a case where a lap welding mode is adopted, an allowable range of a dimensional error of an outer shape of each region before joining can be widened compared to a case where a butt welding mode is adopted. In addition, in the case where the lap welding mode is adopted, spot welding can be adopted, so that the impact-absorbing member 10 can be manufactured efficiently at low cost.

According to the method for manufacturing the impact-absorbing member 20 using the tailored blank 200 as described above, there is no need to weld the first connection band portion 21 and the connected portion 23 after the press forming.

In addition, a plurality of the impact-absorbing portions 23a can be formed as a single impact-absorbing member 20 and attached to the automobile door 1. Therefore, the impact-absorbing member 20 can be manufactured efficiently at low cost.

In addition, the tailored blank 200 can be obtained by punching substantially rectangular steel sheets for blanks respectively corresponding to the first connection band portion forming region 201, the connected portion forming regions 203, and the second connection band portion forming region 205, and joining the punched steel sheets to each other. Therefore, an amount of scrap generated from the steel sheets for blanks can be reduced. Therefore, a yield is improved, and the impact-absorbing member 20 can be manufactured at an even lower cost.

In the second embodiment, the tailored blank 200 joined at the overlapping portion has been described as an example, but a tailored blank joined by welding end edges of the steel sheets for blanks with laser welding, plasma welding, or the like can also be adopted.

In addition, in the tailored blank 200, the joint portion (welded portion w) is present at a boundary between the first connection band portion 21 and the connected portion 23, but the joint portion is not limited thereto.

### (Third Embodiment)

Hereinafter, an impact-absorbing member 30 for an automobile door according to a third embodiment of the present invention (hereinafter, referred to as the impact-absorbing member 30) will be described.

The impact-absorbing members 10 and 20 according to the first and second embodiments are formed using the single-piece blank 100 or tailored blank 200 having a shape in which the connected portion forming regions 103 and 203 are linear.

A basic configuration of the impact-absorbing member 30 according to the third embodiment is the same as those of the impact-absorbing members 10 and 20 according to the first and second embodiments, but differs therefrom in that a blank 300 having a shape with cutouts C formed is used.

For simplification of the description, overlapping descriptions with the first and second embodiments are omitted.

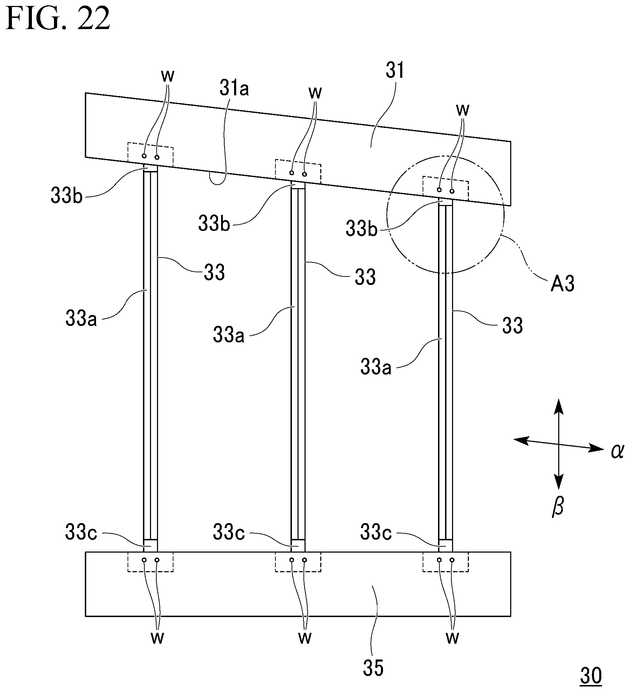

FIG. 22 is a schematic view of the impact-absorbing member 30. As shown in FIG. 22, the impact-absorbing member 30 according to the present embodiment includes a first connection band portion 31, three connected portions 33, and a second connection band portion 35.

The first connection band portion 31 is a portion to which each of the three connected portions 33 are integrated and connected at spot-welded portions w. The first connection band portion 31 is attached to the automobile door 1 by welding or the like.

The connected portion 33 is a portion extending along the second direction β from an end edge 31a of the first connection band portion 31 in a width direction (a direction perpendicular to the first direction α).

As shown in FIG. 22, the connected portion 33 includes an impact-absorbing portion 33a, a first transition portion 33b, and a second transition portion 33c.

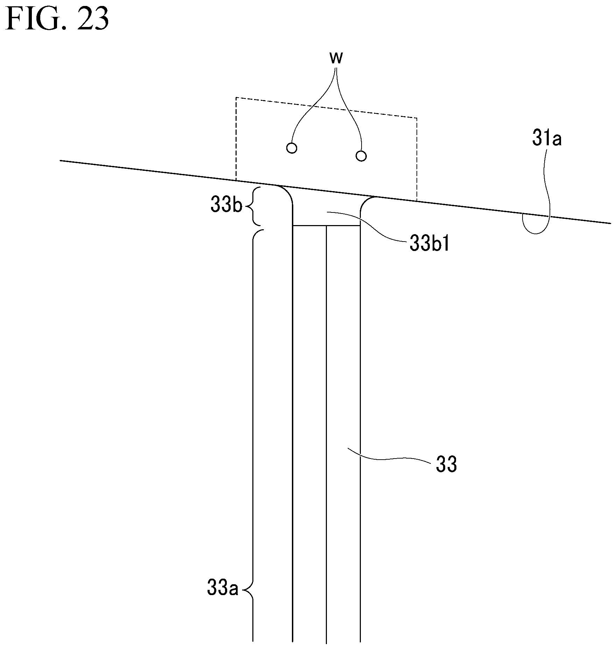

FIG. 23 is an enlarged view of an A3 portion shown in FIG. 22. As shown in FIG. 23, the first transition portion 33b extends along the second direction β from the end edge 31a of the first connection band portion 31 in the width direction.

As shown in FIG. 23, the first transition portion 33b includes a bottom surface 33b1 continuously connected to a bottom surface of the impact-absorbing portion 33a.

That is, the first transition portion 33b connects the first connection band portion 31 to the bottom surface of the impact-absorbing portion 33a in a planar manner.

In the first transition portion 33b, since the first connection band portion 31 having a flat sheet shape and the bottom surface having a flat sheet shape in the impact-absorbing portion 33a, which is a closed cross-sectional structure, are connected without a significant change in cross-sectional shape, the occurrence of cracking during the processing of the impact-absorbing portion 33a can be suppressed.

In addition, a length of the first transition portion 33b in the second direction β can be reduced, so that a length of the impact-absorbing portion 33a in the second direction β can be increased. Therefore, the amount of impact absorbed by the impact-absorbing portion 33a can be increased.

Therefore, according to the impact-absorbing member 30 according to the present embodiment, it is possible to manufacture the automobile door 1 capable of exhibiting excellent panel rigidity and impact resistance performance at low cost.

A method for manufacturing the impact-absorbing member 30 is substantially the same as the method for manufacturing the impact-absorbing member 10 according to the first embodiment except that the blank 300 is used instead of the single-piece blank 100, and thus a description thereof will be omitted.

Hereinafter, the blank 300 will be described.

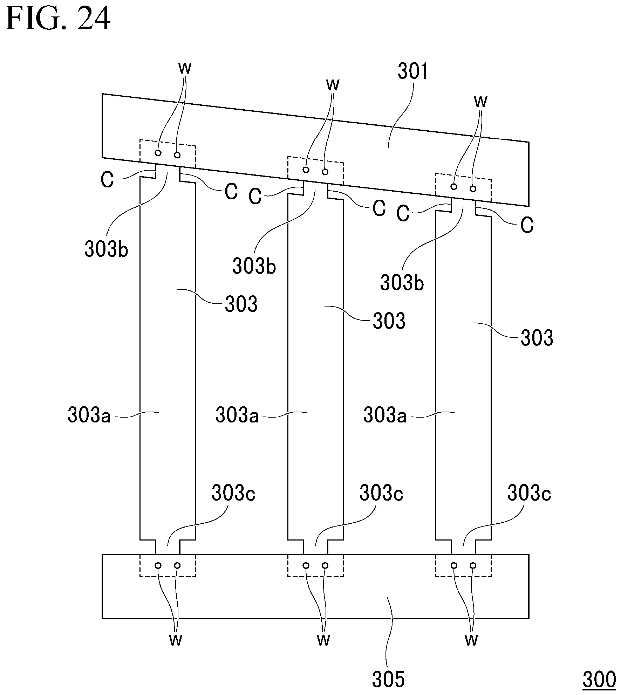

FIG. 24 is a schematic view of the blank 300.

The blank 300 includes a first connection band portion forming region 301 that is formed into the first connection band portion 31 through a pressing step, three connected portion forming regions 303 that are formed into the three connected portions 33 through the pressing step, and a second connection band portion forming region 305 that is formed into the second connection band portion 35 through the pressing step.

In addition, the connected portion forming region 303 includes an impact-absorbing portion forming region 303a that is formed into the impact-absorbing portion 33a through the pressing step, a first transition portion forming region 303b that is formed into the first transition portion 33b through the pressing step, and a second transition portion forming region 303c that is formed into the second transition portion 33c through the pressing step.

In the blank 300, cutouts C are formed at both ends in the width direction in the first transition portion forming region 303b.

By forming the cutouts C, when the blank 300 is press-worked into the impact-absorbing member 30, the first connection band portion 31 having a flat sheet shape and a bottom surface having a flat sheet shape in the impact-absorbing portion 33a, which is a closed cross-sectional structure, can be connected in a flat manner at the first transition portion 33b. Therefore, it is possible to suppress the occurrence of cracking during the processing of the impact-absorbing portion 33a.

In addition, a length of the first transition portion 33b in the second direction β can be reduced, so that a length of the impact-absorbing portion 33a in the second direction β can be increased. Therefore, the amount of impact absorbed by the impact-absorbing portion 33a can be increased.

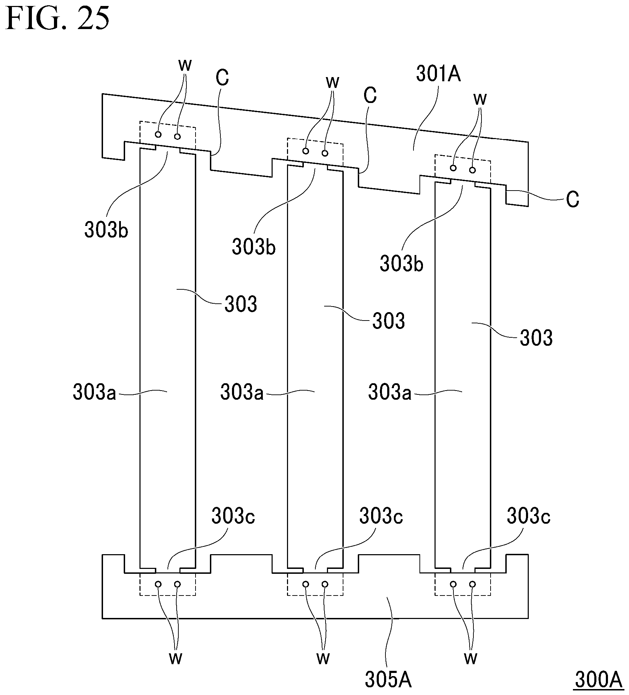

The cutouts C may be formed in the first connection band portion as in a blank 300A of a modification example shown in FIG. 25.

According to the method for manufacturing the impact-absorbing member 30 using the blank 300 in which the cutouts C are formed as described above in the single-piece blank 100 according to the first embodiment or the tailored blank 200 according to the second embodiment, there is no need to weld the first connection band portion 31 and the connected portion 33 after the press forming.

In addition, a plurality of the impact-absorbing portions 33a can be formed as a single impact-absorbing member 30 and attached to the automobile door 1.

Furthermore, by forming the cutouts C, it is possible to suppress the occurrence of cracking during the processing of the impact-absorbing portion 33a.

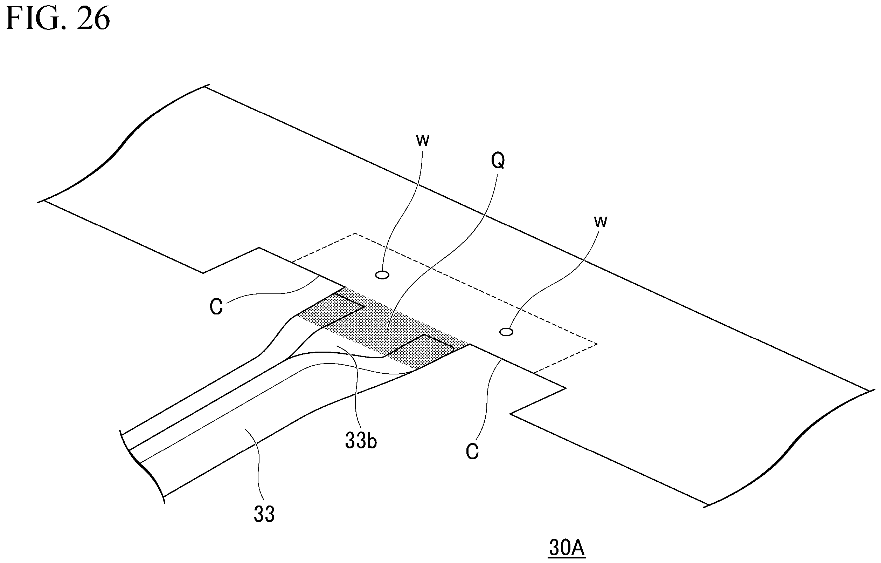

FIG. 26 is a partially enlarged view of an impact-absorbing member 30A formed from the blank 300A shown in FIG. 25. As shown in FIG. 26, at an end portion of the first transition portion 33b of the connected portion 33, a flat portion Q in which a part of the first transition portion 33b is folded and overlapped is formed. In a case where the flat portion Q is disposed to overlap the flange portion 1b3 of the reinforcing member 1b, a collision load that is applied to the impact-absorbing member 10 can be efficiently supported by the reinforcing member 1b.

Therefore, it is possible to manufacture the automobile door 1, which is capable of exhibiting excellent panel rigidity and impact resistance performance, at low cost.

While the preferred embodiments of the present invention have been described above in detail with reference to the accompanying drawings, the present invention is not limited to such examples. It is clear that by a person having ordinary knowledge in the field of the technique to which the present invention belongs, various change examples or modification examples can be conceived within the scope of the technical idea of the present invention and it will be understood that these examples also naturally belong to the technical scope of the present invention.

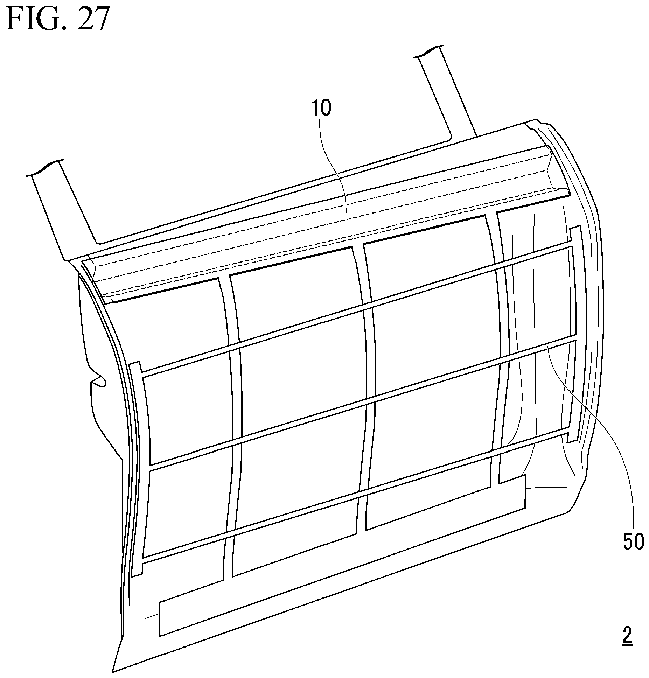

For example, as in an automobile door 2 shown in FIG. 27, another impact-absorbing member 50 may be attached in a posture where connected portions extend in the horizontal direction. As the impact-absorbing member 50, the impact-absorbing members 10, 20, and 30 described in the above embodiments may be used.

Although a configuration in which the first connection band portion connects the three connected portions has been described as an example, the number of connected portions may be four or more. In the above embodiments, a configuration in which an upper end of the connected portion is connected to the first connection band portion and a lower end thereof is connected to the second connection band portion has been described as an example, but a configuration may be adopted in which only one end portion (either the upper end or the lower end) may be connected to the first connection band portion.

Furthermore, the automobile door may be not only a front door disposed in the side portion of the automobile, but also a rear door disposed in the side portion of the automobile, or a back door (also referred to as a tailgate) located at a rear portion of the automobile.

In the above embodiments, steel is used as a material for the blank and the impact-absorbing member, but metals such as stainless steel, aluminum, or an aluminum alloy, or CFRP may also be used.

### INDUSTRIAL APPLICABILITY

According to the present invention, it is possible to provide an impact-absorbing member for an automobile door, an automobile door, a blank, and a method for manufacturing an impact-absorbing member for an automobile door, which are capable of exhibiting excellent panel rigidity and impact resistance performance at low cost.

### REFERENCE SIGNS LIST

1 Automobile door
1a Exterior panel
1b Reinforcing member
1c Interior panel
10 Impact-absorbing member
11 First connection band portion
13 Connected portion
13a Impact-absorbing portion
13b First transition portion
13c Second transition portion
15 Second connection band portion
23E Overlapping surface
100 Single-piece blank
200 Tailored blank

## Claims

1. An impact-absorbing member for an automobile door formed from a blank, which is a single-piece blank or a tailored blank, the impact-absorbing member for an automobile door comprising:
a connection band portion extending in a first direction; and
at least three connected portions each having one end connected to the connection band portion and extending in a second direction intersecting the first direction,
wherein the connected portion has an impact-absorbing portion that is a closed cross-sectional structure.

2. The impact-absorbing member for an automobile door according to claim 1,
wherein the blank is the tailored blank, and
the connection band portion and the connected portion are integrated and connected at a joint portion.

3. The impact-absorbing member for an automobile door according to claim 2,
wherein the connected portion has an overlapping surface that overlaps with a part of the connection band portion, and
the joint portion is formed in the overlapping surface such that the connection band portion and the connected portion are integrated and connected.

4. The impact-absorbing member for an automobile door according to claim 2,
wherein the joint portion is a welded portion, and the welded portion has no HAZ-softened portion.

5. The impact-absorbing member for an automobile door according to claim 1,
wherein a tensile strength of the connected portion is 1,100 MPa or more.

6. The impact-absorbing member for an automobile door according to claim 1,
wherein a Vickers hardness of the connected portion is 350 HV or more.

7. An automobile door comprising:
the impact-absorbing member for an automobile door according to any one of claims 1 to 6; and
an exterior panel to which the impact-absorbing member for an automobile door is attached.

8. The automobile door according to claim 7,
wherein the impact-absorbing member for an automobile door is attached to a reinforcing member.

9. The automobile door according to claim 8,
wherein the reinforcing member has an open cross section in a cross section perpendicular to an extension direction of the reinforcing member, and
a closed cross-sectional structure is formed by attaching the connection band portion of the impact-absorbing member for an automobile door to the reinforcing member.

10. A blank for forming an impact-absorbing member for an automobile door, the impact-absorbing member for an automobile door including a connection band portion extending in a first direction and at least three connected portions each having one end connected to the connection band portion and extending in a second direction intersecting the first direction, the connected portion having an impact-absorbing portion that is a closed cross-sectional structure, the blank comprising:
a connection band portion forming region that extends in the first direction and is formed into the connection band portion; and
at least three connected portion forming regions that extend in the second direction and are formed into the at least three connected portions, each of the at least three connected portion forming regions having one end connected to the connection band portion forming region,
wherein the blank is a single-piece blank or a tailored blank.

11. The blank according to claim 10,
wherein the blank is the tailored blank, and
the connection band portion forming region and the connected portion forming region are integrated and connected at a joint portion.

12. The blank according to claim 11,
wherein the connected portion forming region has an overlapping surface forming region that overlaps with a part of the connection band portion forming region, and
the joint portion is formed in the overlapping surface such that the connection band portion forming region and the connected portion forming region are integrated and connected at the joint portion.

13. The blank according to any one of claims 10 to 12,
wherein a cutout is formed in the vicinity of a portion where the connection band portion forming region and the connected portion forming region are connected.

14. A method for manufacturing an impact-absorbing member for an automobile door, the impact-absorbing member for an automobile door including a connection band portion extending in a first direction and at least three connected portions each having one end connected to the connection band portion and extending in a second direction intersecting the first direction, the connected portion having an impact-absorbing portion that is a closed cross-sectional structure, the method comprising:
a first step of press-forming a blank, which includes a connection band portion forming region that extends in the first direction and is formed into the connection band portion, and at least three connected portion forming regions that extend in the second direction and are formed into the at least three connected portions, each of the at least three connected portion forming regions having one end connected to the connection band portion forming region, and is a single-piece blank or a tailored blank, in a cold state to obtain an intermediate press-formed article; and
a second step of press-forming the intermediate press-formed article to obtain the impact-absorbing member for an automobile door,
wherein, in the second step, in a case where the blank is the single-piece blank, the intermediate press-formed article is press-formed in a state of being heated to a temperature of an Ac3 point or higher, and in a case where the blank is the tailored blank, the intermediate press-formed article is press-formed in a cold state or in a state of being heated to a temperature of the Ac3 point or higher.

15. The method for manufacturing an impact-absorbing member for an automobile door according to claim 14,
wherein the blank is the tailored blank, and
the connection band portion forming region and the connected portion forming region are integrated and connected at a joint portion.

16. The method for manufacturing an impact-absorbing member for an automobile door according to claim 15,
wherein the connected portion forming region has an overlapping surface forming region that overlaps with a part of the connection band portion forming region, and
the joint portion is formed in the overlapping surface such that the connection band portion forming region and the connected portion forming region are integrated and connected at the joint portion.

17. The method for manufacturing an impact-absorbing member for an automobile door according to claim 15 or 16,
wherein, in the second step, the intermediate press-formed article is press-formed in a state of being heated to a temperature of the Ac3 point or higher.
